# EUROPEAN PATENT APPLICATION

(11) **EP 3 718 786 A1**
(43) Date of publication of application: **07.10.2020**
(21) Application number: 19800909.4
(22) Date of filing: 22.03.2019
(51) Int. Cl.: B60B 33/00, B62B 5/04

(54) **BRAKE DEVICE FOR TURNABLE CASTER**

(30) Priority: 30.07.2018 JP 2018141999; 02.08.2018 JP 2018146075
(71) Applicant: Genesis Co., Ltd., Hamamatsu-shi, Shizuoka 430-0856 (JP)
(72) Inventor: FURUTA, Yoshihisa, Hamamatsu-shi Shizuoka 4300856 (JP)
(74) Representative: Wiese, Gerhard
(86) International application number: PCT/JP2019/012127
(87) International publication number: WO 2020/026517

(57) **Abstract**

An object is to provide a brake device for a swivel caster having high durability with a simple power transmission structure, and provided is a brake device 10 for a swivel caster wherein a brake shoe 16 is disposed so as to face a peripheral surface of a wheel 6 of the swivel caster 4a and a cable 22, 23 connected to an operation lever 18 is inserted into a pivot shaft 7 of the caster to be connected to the brake shoe 16, characterized in that a ball chain 26 is interposed at least in a part of the cable 23 inserted into the pivot shaft 7.

## Description

The present invention relates to a brake device for a swivel caster.

### [Background Art]

As disclosed in PTL 1, there is a brake device for a swivel caster wherein a brake shoe is provided in a frame and an operation member is inserted and fitted in a hole perforated through the top board of the frame, and the operation member is operated synchronously with a brake operation lever through transmitting means configured of a cam, a link rod, or the like, which is connected to the brake operation lever.

PTL 2 discloses a brake device which uses cables as power transmitting means.

### [Citation List]

[PTL 1] Japanese Patent Application Publication No. 2008-302903
[PTL 2] Japanese Patent Application Publication No. 2004-9906

### [Technical Problem]

In the power transmitting means disclosed in PTL 1, since the cam, the link rod, or the like is necessary to operate the operation member, the structure can be complicated when for example the operation lever is in a distant position from the caster.

Meanwhile, in the power transmitting means disclosed in PTL 2, the brake shoe is operated directly through the cables. This does not complicate the structure if for example the operation lever is in a distant position from the caster, but the cables may be twisted and can sustain damage such as a rupture when repeatedly twisted as the caster repeatedly rotates.

With the foregoing problem associated with the background art in view, it is an object of the present invention to provide a brake device for a swivel caster having high durability with a simple power transmission structure.

In order to achieve the above-described object, a brake device for a swivel caster according to the invention has the following features [1] to [5].
[1] A brake device for a swivel caster, wherein a brake shoe is disposed so as to face a peripheral surface of a wheel of the swivel caster and a cable connected to an operation lever is inserted into a pivot shaft of the caster to be connected to the brake shoe, and wherein a ball chain is interposed at least in a part of the cable inserted into the pivot shaft.
[2] The brake device for a swivel caster according to [1], wherein two brake shoes are pivotally provided so as to face the peripheral surface of the wheel, and when the brake shoes abut against the peripheral surface of the wheel, one of the brake shoes is provided so as to come into pressure-contact against one rotation direction of the wheel and the other brake shoe is provided so as to come into pressure-contact against the other rotation direction of the wheel.
[3] The brake device for a swivel caster according to [1] or [2], wherein a part abutting against an outer peripheral surface of the wheel is formed in the brake shoe to have a rough surface.
[4] The brake device for a swivel caster according to any one of [1] to [3], wherein a spring is interposed in the cable.
[5] The brake device for a swivel caster according to any one of [1] to [4], wherein a cable connector having a slide member is provided in the middle of the cable, and the cable on an operation lever side is connected to the cable on a brake shoe side through the slide member.

### [Advantageous Effects of Invention]

By the brake device for a swivel caster according to the invention according to [1], the twisting of the cable is absorbed by the ball chain when the swivel caster rotates. Therefore, the cable is not twisted and can be prevented from suffering damage such as a rupture attributable to such twisting.

By the brake device for a swivel caster according to the invention according to [2], one of the brake shoes acts to come into pressure-contact against (dig into) the peripheral surface of the wheel when the wheel of the caster rotates normally or reversely, so that a sure braking effect can be provided in addition to the above advantageous effect.

By the brake device for a swivel caster according to the invention according to [3], sufficient friction by the brake shoes against the wheel can be obtained because of the rough surface, so that a more stable and sure braking effect can be provided in addition to the above advantageous effects.

By the brake device for a swivel caster according to the invention according to [4], when for example the brake shoe digs into the wheel and cannot be easily released, the interposed spring can expand to alleviate the load on the cable and then bias the brake shoe in the releasing direction to carry out the function of releasing the brake in addition to the above advantageous effects.

By the brake device for a swivel caster according to the invention according to [5], cables for multiple operation levers can be connected to the slide member and the cables to brake shoes for multiple casters may be connected to the slide member, so that power from a selected operation lever can be transmitted to a corresponding one of the casters in addition to the above advantageous effects.

### [Brief Description of Drawings]

Fig. 1 is a perspective view illustrating the concept of a cart provided with a brake device for a swivel caster accordance an embodiment of the present invention.
Fig. 2 is a longitudinal sectional view of the caster showing an essential part of the brake device for the swivel caster according to the present invention in a brake activated state.
Fig. 3 is a longitudinal sectional view of the caster showing an essential part of a brake device for the swivel caster according to the present invention in a brake released state.
Fig. 4 is a sectional view illustrating the concept of the operation member of the brake device for the swivel caster according to the present invention.
Fig. 5 is a sectional view of a cable connector for the brake device for the swivel caster according to the present invention.

### [Description of Embodiment]

Hereinafter, a brake device for a swivel caster according to the present invention will be described in detail with reference to an embodiment shown in the drawings.

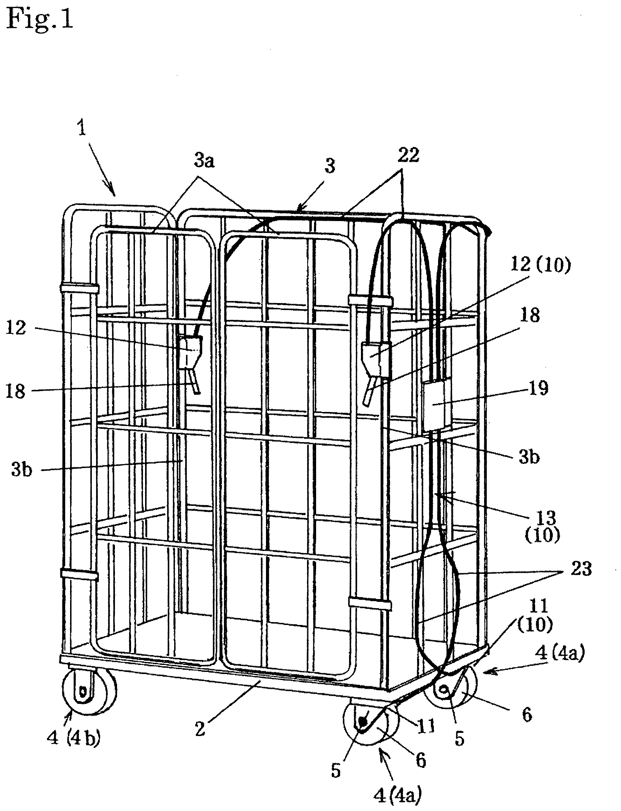

Fig. 1 shows a cage cart 1. The cage cart 1 has a rectangular bottom plate 2. A fence 3 is provided upright around the bottom plate 2. One side of the fence 3 forms a double-opening door 3a.

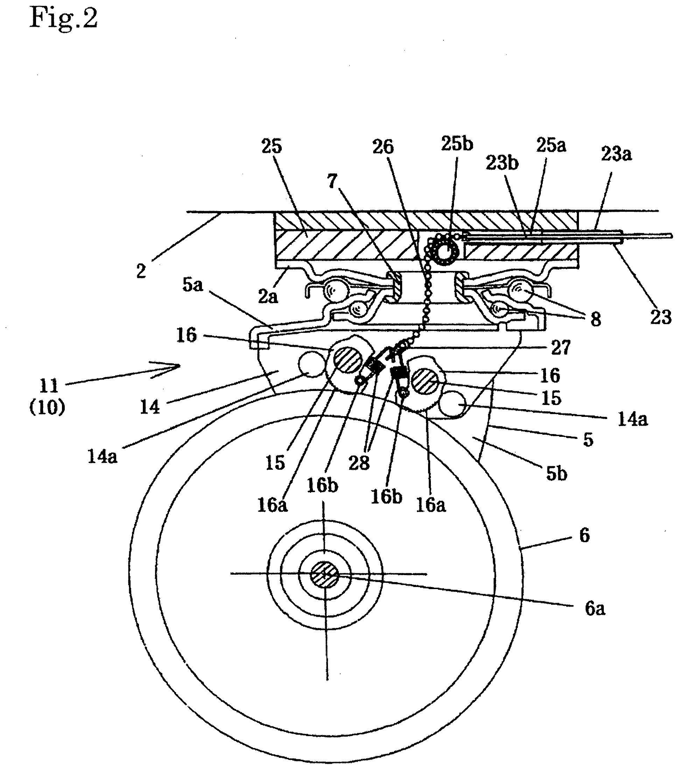

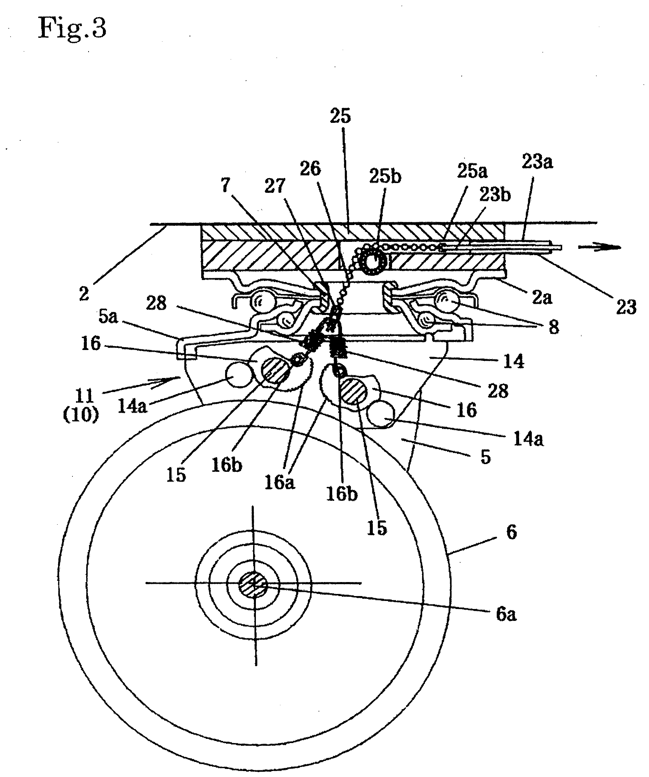

Casters 4 are provided at the four corners of the bottom plate 2, two of the casters are swivel casters 4a, and the other two casters are rigid casters 4b. The swivel casters 4a each include a substantially U-shaped frame 5 and a wheel 6 rotatably held at the frame, and as shown in Figs. 2 and 3, a bracket 2a is fixed to the lower surface of the bottom plate 2 with a prescribed gap, a cylindrical shaft 7 is provided through the center of the bracket 2a, and the frame 5 is rotatably provided at the bottom plate 2 of the cart 1 through a bearing 8 mounted to the cylindrical shaft 7.

The cage cart 1 is provided with a brake device 10 for a swivel caster. The brake device 10 includes a brake part 11 provided at the swivel caster 4a, operation members 12 provided at pillars 3b which are in diagonally opposite positions of the fence 3, and power transmitting means 13 which connects the brake part 11 and the operation member 12. The brake device 10 for the swivel caster which includes the brake part 11, the operation member 12, and the power transmitting means 13 may be attached as an additional device to a general cage cart which does not have a brake device. When all of the casters 4 provided at the four corners of the cart are swivel casters 4a, the brake part 11 is preferably provided for each of the four swivel casters 4a.

In the brake part 11 as shown in Figs. 2 and 3, a bracket 14 is provided at each of the side plates 5b of the frame 5 of the swivel caster 4a. Two shafts 15 are provided between the brackets 14. The shafts 15 are set equidistant from the shaft 6a. The brake shoes 16 are rotatably held on the shafts 15. The brake shoes 16 are in contact with the circumferential surface of the wheel 6 in one state as shown in Fig. 2 and detached from the circumferential surface of the wheel 6 in the other state as shown in Fig. 3. A rough surface 16a formed by knurling is provided on the peripheral surface of the brake shoe 16, and a hook 16b is formed at the end. The shape of the brake shoe 16 is not limited to the illustrated shape and may be a simple plate shape.

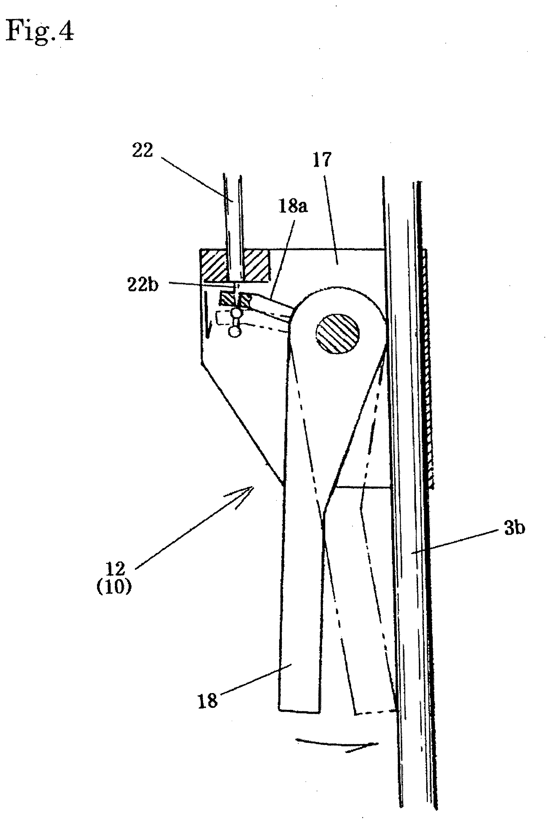

As shown in Fig. 4, in the operation member 12, a bracket 17 is provided at the pillar 3b of the fence 3. An operation lever 18 is provided pivotably in the bracket 17. A tongue piece 18a which holds the cable 22, which will be described, is provided to protrude at the base of the operation lever 18.

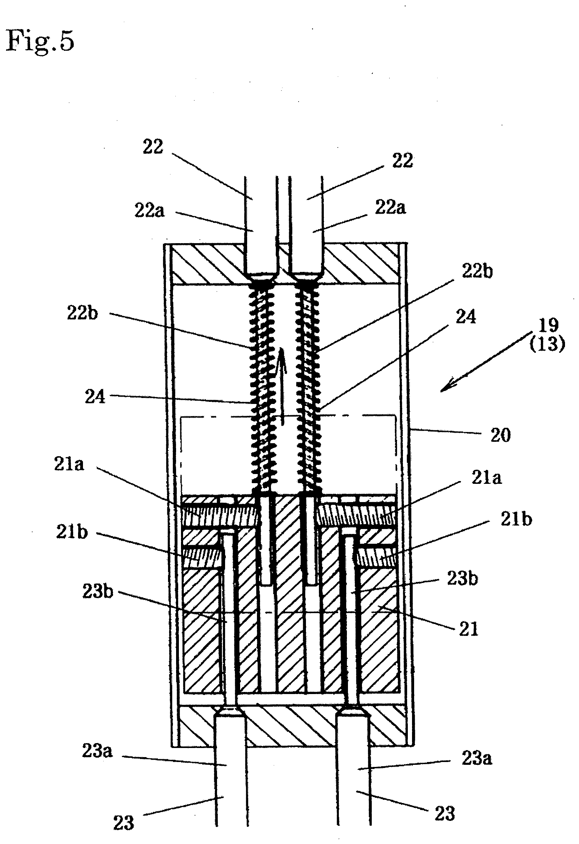

The power transmitting means 13 includes a cable connector 19 provided at a side of the fence 3. As shown in Fig. 5, the cable connector 19 includes a slide member 21 in a case 20. The slide member 21 is provided to connect operation member side cables 22 and brake side cables 23. In the cable connector 19, the outer tubes 22a of the cables 22 are engaged to one end of the case 20 and the outer tubes 23a of the cables 23 are engaged to the other end of the case 20. The inner cables 22b of the cables 22 are engaged to one end of the slide member 21 by screws 21a, and the inner cables 23b are engaged to the other end of the slide member 21 by screws 21b. In the cable connector 19, the slide member 21 is biased to the brake side by springs 24 loosely fitted on the inner cables 22b of the cables 22. As shown in Fig. 1, the cables 22 are guided upwardly from the operation member 12 along the pillar 3b and to the cable connector 19 along the upper end and side of the fence 3, and the cables 23 are guided to the base plates 25 of the brake parts 11 provided at the casters along the side of the fence 3.

The opposite end of the cable 22 is engaged to the tongue piece 18a of the operation lever 18 in the operation member 12 as shown in Fig. 4. Meanwhile, the base plate 25 is mounted to the bracket 2a fixed at the bottom plate 2 of the cart as shown in Figs. 2 and 3. The base plate 25 has a cable hole 25a formed to extend from the end surface to the center, turn perpendicularly in the center, and reach the lower surface, and a pulley 25b is provided in the turning part. At the opposite end of the cable 23, the outer tube 23a is engaged to the cable hole 25a of the base plate 25. The inner cable 23b inserted through the cable hole 25a is connected to one end of the ball chain 26. The ball chain 26 runs over the pulley 25b and through the cylindrical shaft 7 to reach above the brake shoe 16. The other end of the ball chain 26 is then connected to two springs 28 through pins 27, and the springs 28 are connected to the hooks 16b of the brake shoes 16.

By the brake device 10 for the swivel caster according to the embodiment, the slide member 21 of the cable connector 19 is moved to the brake side by the biasing force of the springs 24 in a normal state, in other words, when the operation lever 18 is in a non-operation position indicated by the solid line. In this way, the inner cables 23b of the cables 23 are loosened as shown in Fig. 2, and the brake shoes 16 abut against the circumferential surface of the wheel 6 by their own weights and/or the biasing force of a spring which is not shown.

In this state, when the wheel 6 is rotated for example in the clockwise direction, the right brake shoe 16 is rotated in the counterclockwise direction as the wheel 6 is rotated, and acts to come into pressure-contact against the circumferential surface of the wheel 6 (when the wheel 6 is made of rubber, the pressure contacting force causes the right brake shoe 16 to dig into the rubber wheel 6). Therefore, the clockwise rotation of the wheel 6 is locked. Conversely, when the wheel 6 is rotated in the counterclockwise direction, the left brake shoe 16 is rotated in the clockwise direction as the wheel 6 is rotated, and acts to come into pressure-contact against the circumferential surface of the wheel 6 (when the wheel 6 is made of rubber, the pressure contacting force causes the left brake shoe 16 to dig into the rubber wheel 6). The counterclockwise rotation of the wheel 6 is therefore locked.

When the operation lever 18 is operated in the direction of the pillar 3b (to the position indicated by the double-dotted chain line), the inner cable 22b of the cable 22 is pulled up, which causes the slide member 21 of the cable connector 19 to be pulled toward the operation member. The brake shoes 16 are then caused to turn upward through the ball chain 26 and the springs 28, and the brake shoes 16 are detached from the circumferential surface of the wheel 6. This allows the wheel 6 to rotate freely and the cart 1 to travel in a desired direction. At the time, the brake shoes 16 are prevented from further turning by stoppers 14a provided in the bracket 14. When for example the brake shoes 16 dig into the wheel 6 and cannot be easily moved to turn upward, the springs 28 expand to alleviate the load on the cables 22b and then provide biasing force to cause the brake shoes 16 to further turn upward, and therefore when the cart 1 is shook lightly and force which causes the wheel 6 to turn is provided, the digging of the brake shoes 16 into the wheel 6 is released and the tensile force of the springs 28 acts to release the brake.

While the brake device for the swivel caster according to the embodiment of the present invention has been described, it should be understood that the described embodiment is not intended to limit the invention, and various modifications and changes may be made within the scope of the technical ideas of the present invention as set forth in the appended claims.

For example in the description of the embodiment, the cage cart 1 has been illustrated as an example, while the brake device for a swivel caster according to the present invention may be widely used as a brake device for a swivel caster in an item such as a flat cart other than the cage cart described above, a foldable cart, a wheelchair, a stroller, a wagon, a bed, a copier, an IV stand, a compressor, a spot cooler, a generator, and a welding machine. According to the present invention, the ball chain 26 widely refers to a connector which is not twisted by turning, and the material of the ball chain is not limited. According to the present invention, the springs 24 and 28 widely refer to machine elements which utilize the elasticity of an object which deforms in response to application of force and returns to the original shape in response to removal of the force, and the coil springs as illustrated as well as a plate spring or a torsion bar may be used.

### [Industrial applicability]

The brake device for the swivel caster according to the present invention described above has high durability with a simple power transmission structure, and can therefore be widely used as a brake device for a swivel caster in any of various articles such as a cart and a wheelchair.

### [Reference Signs List]

- 1: Cart
- 2: Bottom plate
- 3: Fence
- 3a: Door
- 3b: Pillar
- 4: Caster
- 4a: Swivel caster
- 4b: Rigid caster
- 5: Frame
- 5a: Top plate
- 6: Wheel
- 6a: Shaft
- 7: Cylindrical shaft
- 8: Bearing
- 10: Brake device
- 11: Brake part
- 12: Operation member
- 13: Power transmitting means
- 14: Bracket
- 14a: Stopper
- 15: Shaft
- 16: Brake shoe
- 16a: Rough surface
- 20: Case
- 21: Slide member
- 21a, 21b: Screw
- 22: Operation member side cable
- 22a: Outer tube
- 22b: Inner cable
- 23: Brake side cable
- 23a: Outer tube
- 23b: Inner cable
- 24: Spring
- 25: Base plate
- 26: Ball chain
- 27: Pin
- 28: Spring

## Claims

1. A brake device for a swivel caster, wherein a brake shoe is disposed so as to face a peripheral surface of a wheel of the swivel caster and a cable connected to an operation lever is inserted into a pivot shaft of the caster to be connected to the brake shoe, and wherein
a ball chain is interposed at least in a part of the cable inserted into the pivot shaft.

2. The brake device for a swivel caster according to claim 1, wherein
two brake shoes are pivotally provided so as to face the peripheral surface of the wheel, and when the brake shoes abut against the peripheral surface of the wheel, one of the brake shoes is provided so as to come into pressure-contact against one rotation direction of the wheel and the other brake shoe is provided so as to come into pressure-contact against the other rotation direction of the wheel.

3. The brake device for a swivel caster according to claim 1 or 2, wherein
a part abutting against an outer peripheral surface of the wheel is formed in the brake shoe to have a rough surface.

4. The brake device for a swivel caster according to any one of claims 1 to 3, wherein
a spring is interposed in the cable.

5. The brake device for a swivel caster according to any one of claims 1 to 4, wherein
a cable connector having a slide member is provided in the middle of the cable, and
the cable on an operation lever side is connected to the cable on a brake shoe side through the slide member.
